# EUROPEAN PATENT SPECIFICATION

(11) **EP 1 778 599 B1**
(45) Date of publication and mention of the grant of the patent: **16.10.2013**
(21) Application number: 05789358.8
(22) Date of filing: 10.03.2005
(51) Int. Cl.: C04B 26/04, C04B 26/02

(54) **RESIN COMPOSITION COMPRISING STYRENE-METHYLMETHACRYLATE COPOLYMER, ARTIFICIAL MARBLE PRODUCED USING THE SAME, AND THE PROCESS FOR PRODUCING THE ARTIFICIAL MARBLE USING THE SAME**
HARZZUSAMMENSETZUNG MIT STYROL-METHYLMETHACRYLAT-COPOLYMER, DAMIT HERGESTELLTER KUNSTMARMOR UND VERFAHREN ZUR HERSTELLUNG DES KUNSTMARMORS
COMPOSITION DE RÉSINE COMPRENANT UN COPOLYMÈRE STYRÈNE-MÉTHYLMÉTHACRYLATE, MARBRE ARTIFICIEL FABRIQUÉ A L"AIDE DE CELLE-CI ET PROCÉDÉ DE FABRICATION DU MARBRE ARTIFICIEL UTILISANT LADITE COMPOSITION

(30) Priority: 12.08.2004 KR 2004063450
(43) Date of publication of application: 02.05.2007
(73) Proprietor: LG Chem. Ltd., Seoul 150-010 (KR)
(72) Inventor: KIM, Hang-Young; 402-906, Yeolmaemaeul, 858,, Daejeon 305-770 (KR); SUNG, Min-Chul 202, Wuseongyeonrib, 112-11,, Seoul 135-955 (KR)
(74) Representative: HOFFMANN EITLE
(86) International application number: PCT/KR2005/000667
(87) International publication number: WO 2006/016737

(56) References cited:
- JP-A- 5 171 022
- JP-A- 6 293 544
- JP-A- 03 247 632
- JP-A- 10 287 456
- JP-A- 11 199 293
- JP-A- 11 199 293
- JP-A- 2001 234 083
- JP-A- 2002 105 144
- JP-A- 2002 265 741
- US-A- 3 135 723
- US-A- 4 861 831
- US-A1- 2003 096 887
- US-B1- 6 316 548
- US-B1- 6 548 590
- DATABASE WPI Week 198729 Thomson Scientific, London, GB; AN 1987-203494 XP002558995 BANDO, S; ET AL.: "Inorganic-organic composite useful as artificial marble - with specified differences in refractive index between inorganic powder and organic polymer" -& JP 62 132751 A (KYOWA GAS CHEM IND) 16 June 1987 (1987-06-16)

## Description

### Technical Field

The present invention relates to a resin composition comprising a styrene-methylmethacrylate copolymer, an artificial marble prepared using the same, and a process for preparing the artificial marble using the same. More particularly, the present invention relates to an artificial marble having improved transparency wherein a methylmethacrylate monomer (refractive index 1.49) and a highly refractive styrene monomer (refractive index 1.59) are co-polymerized to obtain a styrene-methylmethacrylate which is then used to reduce the refractive index difference between an aluminum hydroxide and methylmethacrylate, thus solving problems associated with decreased transparency due to refractive index difference between the methylmethacrylate and aluminum hydroxide (refractive index 1.57 to 1.60) which is used as a filler, when a conventional methylmethacrylate and polymer thereof are used alone in preparing the artificial marble.

### Background Art

The term "Artificial marble" commonly refers to artificial synthetics that have realized texture of natural stones by compounding natural stone powder or minerals with resin components (such as acrylics, unsaturated polyesters, epoxies and the like) or cement and adding various pigments and additives thereto. As representative examples of such artificial marbles, mention may be made of acrylic artificial marble and polyester based artificial marble. These acrylic artificial marble and polyester based artificial marble exhibit strength and the color tone unique to solid materials. In particular, the acrylic artificial marble has excellent processability and weatherability. In addition, the acrylic artificial marble is relatively light-weight and non-porous compared to natural marbles, and has elegant color tone, excellent strength and weatherability comparable to natural marbles. Further, the acrylic artificial marble has superior processability comparable to lignum and thus may be distinctive from natural marbles.

Meanwhile, the polyester based artificial marble has disadvantages such as relatively poor weatherability and heat resistance compared to the acrylic artificial marble, and difficulty in thermoforming thereof. However, the polyester based artificial marble also has advantages such as excellent transparency of the polymerized product due to a refractive index similar to that of aluminum hydroxide used as the filler, and thus is capable of realizing natural and deep appearance as exhibited in natural stones. Such artificial marbles have recently used for a variety of applications such as deck plate materials, dressing tables, rinsing lavatory units, tables, wall materials, flooring materials, furniture, interior finish, indirect illumination panels and interior pieces.

Japanese Patent Laid-open No. 2002-105144 discloses a polyester based artificial marble to which a methylmethacrylate monomer was added to obtain an excellent weatherability effect of the acrylic artificial marble. Such an artificial marble, however, suffers from problems associated with increased volatile components and decreased compound viscosity, upon addition of the monomer, and effects obtained by addition of the methylmethacrylate monomer are also insufficient. Japanese Patent Laid-open No. Hei 5-171022 discloses use of an unsaturated polyester resin and acrylic resin mixed in a kneader to obtain the same effects as described above. However, this patent also has disadvantages such as increased viscosity of the mixed compounds, and thus is not suitable for continuous molding.

In addition, US Patent No. 3,135,723 discloses a method of co-polymerizing α-methylstyrene with the acrylic resin so as to improve heat resistance of the acrylic resin. This method may be useful as a means for improving heat resistance of the acrylic resin itself, but presents problems associated with superficial appearance characteristics such as transparency and curing conditions when kneading with an inorganic filler and molding.

US 2003/0096887 relates to the preparation of an artificial marble comprising grainy resin cured materials and a matrix wherein the grainy resin cured materials occupy a specified surface area of the artificial marble. The matrix occupies the surface area of the artificial marble at 30 to 1%. According to Example 1 methyl methacrylate and styrene-2-hydroxyethyl methacrylate copolymer is used together with aluminum hydroxide in addition to further ingredients to prepare the resin composition for the artificial marble.

JP 62-132751 relates to a translucent inorganic-organic composite product comprising 10 to 85% by weight of powdered inorganic substance having grain size of 1 to 300 microns such as aluminum hydroxide and 90 to 15% by weight of an organic polymer such as styrene-methyl methacrylate copolymer.

JP 10287546 describes the production of a granule containing artificial marble made of an unsaturated polyester, (meth)acrylic alkyl ester partially polymerized product, a second partially polymerized product formed by copolymerization between (meth)acrylic alkyl ester monomer and a second monomer such as styrene.

US 6,316,548 describes a (meth)acrylic premix comprising a (meth)acrylic monomer (a) and a (meth)acrylic polymer (b) an inorganic filler and a curing agent. Component (a) is a (meth)acrylate having a bicyclo ring, fluorine atom, cyclic ether, cyclohexane ring or tricyclo ring. This is useful for the production of artificial marble.

Finally, JP 06293544 describes a resin composition for artificial marble using a blend of (meth)acrylic esters which consist essentially of methyl methacrylate and also contain 0.1 to 2% by weight of a crosslinkable monomer having at least two ethylenically unsaturated bonds per molecule. Additionally, an aromatic compound is used which has an ethylenically unsaturated bond per molecule.

### Disclosure of Invention

### Technical Problem

Therefore, the present invention has been made in view of the above problems, and it is an object of the present invention to provide a resin composition comprising a styrene-methylmethacrylate copolymer having improved transparency due to reduction of refractive index difference between aluminum hydroxide and methylmethacrylate while maintaining excellent weatherability and thermal characteristics exhibited by conventional acrylic polymers.

It is another object of the present invention to provide an artificial marble prepared using the above-mentioned resin composition.

It is a further object of the present invention to provide a process for preparing an artificial marble.

### Technical Solution

In accordance with an aspect of the present invention, the above and other objects can be accomplished by the provision of a resin composition, comprising: 100 parts by weight of a styrene-methylmethacrylate resin solution containing a styrene-methylmethacrylate copolymer and at least one of styrene and methylmethacrylate; 100 to 200 parts by weight of an inorganic filler; 0.5 to 10 parts by weight of a cross-linkable monomer, wherein the content of styrene in 100 parts by weight of the styrene-methylmethacrylate resin solution is within the range of 10 to 70 parts by weight.

In accordance with another aspect of the present invention, there is provided an artificial marble prepared using the above-mentioned resin composition.

In accordance with yet another aspect of the present invention, there is provided a process for preparing an artificial marble, comprising:
preparing a resin composition;
pouring the prepared resin composition into a continuous mold and curing it at a temperature of 20 to 150°C for 30 min to 2 hours; and
cooling and cutting the resulting cured product, followed by surface polishing.

Now, the present invention will be described in more detail.

A resin composition in accordance with the present invention comprises 100 parts by weight of a styrene-methylmethacrylate resin solution containing a styrene-methylmethacrylate copolymer and at least one of styrene and methylmethacrylate; 100 to 200 parts by weight of an inorganic filler; and 0.5 to 10 parts by weight of a cross-linkable monomer.

In the present invention, the styrene-methylmethacrylate resin composition is prepared by placing a styrene-methylmethacrylate copolymer in styrene, methylmethacrylate or a mixture thereof and then dissolving them at a temperature of 40 to 60°C. Preferably, the content of the copolymer is within the range of 10 to 50 parts by weight, and the content of styrene, methylmethacrylate or a mixture thereof is within the range of 50 to 90 parts by weight, in 100 parts by weight of the styrene-methylmethacrylate resin solution. Where the content of the copolymer is less than 10 parts by weight, it is difficult to achieve desired effects such as an improved reaction rate and prevention of monomer volatilization. Where the content of the copolymer is greater than 50 parts by weight, it is undesirable in that undissolved materials may be present and viscosity may be excessively increased.

The styrene-methylmethacrylate copolymer is prepared from a methylmethacrylate monomer and styrene monomer in the presence of a polymerization catalyst by a conventional polymerization process. The styrene-methylmethacrylate copolymer has excellent weatherability and improved processability while maintaining a level of comparable gloss, transparency, surface hardness and low-absorptivity equal to those of a methylmethacrylate homopolymer. The content of styrene in 100 parts by weight of the styrene-methylmethacrylate copolymer in accordance with the present invention is preferably within the range of 20 to 80 parts by weight.

The total content of styrene in 100 parts by weight of the styrene-methylmethacrylate resin solution in accordance with the present invention is within the range of 10 to 70 parts by weight. If the content of styrene is less than 10 parts by weight, transparency improving effects are not sufficient. In contrast, if the content of styrene is greater than 70 parts by weight, it is undesirable in that lowering of heat deflection temperature and weatherability become worse and the quality of the resulting product undesirably drops to a level of lower-grade unsaturated polyester based artificial marble.

The inorganic filler used in the present invention is selected from the group consisting of aluminum hydroxide, magnesium hydroxide, calcium aluminate and mixtures thereof and preferably has a refractive index of 1.57 to 1.62. This is because, when using a conventional methymethacrylate (refractive index 1.49) and polymers thereof alone, large refractive index difference between the methymethacrylate and filler (for example, aluminum hydroxide : 1.57-1.60) decreases transparency of the polymerized product. However, the present invention employs a styrene-methylmethacrylate copolymer in which the methylmethacrylate monomer was co-polymerized with a highly refractive styrene monomer (refractive index 1.59) in order to reduce the above-mentioned refractive index difference, thus capable of improving transparency of the resulting polymerized material.

Preferably, the inorganic filler has a surface treated with a silane based coupling agent, titanate based coupling agent or stearic acid, in order to improve dispersibility in the resin solution and mechanical strength of the product, and prevent precipitation thereof.

The preferred content of the inorganic filler is within the range of 100 to 200 parts by weight, relative to 100 parts by weight of the styrene-methylmethacrylate resin solution. Where the content of the inorganic filler is less than 100 parts by weight, the resulting artificial marble undergoes weakening of flame retardancy, loss of color tone, sharply decreased strength and deterioration of texture. Conversely, where the content of the inorganic filler exceeds 200 parts by weight, this may cause a lowering of workability such as increased viscosity and reduced curing rate, and a lowering of mechanical characteristics of the artificial marble.

In addition, the particle size of the inorganic filler is preferably within the range of 5 to 100 µm. Where the particle size of the inorganic filler is smaller than 5 µm, the resulting artificial marble may exhibit poor light-transmittance performance. In contrast, where the particle size of the inorganic filler is larger than 100 µm, physical properties of the artificial marble may be deteriorated.

The cross-linkable monomer utilized in the present invention is a multifunctional acrylic monomer having double bond(s) in the molecular structure thereof. For example, mention may be made of ethylene glycol dimethacrylate, diethylene glycol dimethacrylate, triethylene glycol dimethacrylate, tetraethylene glycol dimethacrylate, 1,6-hexane diol dimethacrylate, polybutylene glycol dimethacrylate, trimethylol propane trimethacrylate and neopentyl glycol dimethacrylate and any combination thereof. Among these, ethylene glycol dimethacrylate is particularly preferred. The content of the cross-linkable monomer is preferably within the range of from 0.5 to 10 parts by weight, relative to 100 parts by weight of the styrene-methylmethacrylate resin solution. If the content of the cross-linkable monomer is less than 0.5 parts by weight, thermal properties and strength of the resulting polymerized material are significantly deteriorated. In contrast, if the content of the cross-linkable monomer is greater than 10 parts by weight, it is undesirable in that excessive heat generation in a polymerization process tends to cause cracking.

In the present invention, a polymerization initiator is used to perform polymerization and curing of the styrene-methylmethacrylate resin composition. The polymerization initiator is an organic peroxide and may be selected from the group consisting of diacyl peroxides such as benzoyl peroxide and dicumyl peroxide, hydroperoxides such as butyl hydroperoxide and cumyl hydroperoxide, t-butyl peroxy maleic acid, t-butyl hydroperoxide, acetyl peroxide, lauroyl peroxide, azobisisobutyronitrile and azobisdimethylvaleronitrile and any combination thereof. In addition, polymerization and curing can be performed at room temperature using a mixture of the peroxide and amine or sulfonic acid, or a mixture of the peroxide and a cobalt compound. The content of the polymerization initiator is preferably within the range of 0.1 to 5 parts by weight, relative to 100 parts by weight of the styrene-methylmethacrylate resin solution, and is typically used in combination with a polymerization promoter. Where the content of the polymerization initiator is less than 0.1 parts by weight, the curing rate is slow and curing is not sufficiently progressed. In contrast, where the content of the polymerization initiator is greater than 5 parts by weight, the curing rate is retarded and partial un-curing may occur.

A chain transfer agent serving to control molecular weight is employed in the present invention. The chain transfer agent is preferably a mercaptan compound selected from normal dodecyl mercaptan, tertiary dodecyl mercaptan, benzyl mercaptan and trimethylbenzyl mercaptan. The content of the chain transfer agent is preferably within the range of 0.1 to 5 parts by weight, relative to 100 parts by weight of the styrene-methylmethacrylate resin solution. If the content of the chain transfer agent is less than 0.1 parts by weight, there is no substantial effect. In contrast, where the content of the chain transfer agent is greater than 5 parts by weight, the curing rate is significantly decreased and complete curing cannot be achieved.

Additionally, in accordance with the present invention, in order to obtain surface morphology similar to natural marbles, the pre-molded acrylic, unsaturated polyester based or epoxy based artificial marble is crushed into a predetermined size and the ground material, in the form of granules, thus obtained is mixed and polymerized with the above-mentioned composition followed by molding. The resulting molded article surface is then polished using sand paper or other processes known in the art, in order to provide a smooth surface and gloss. If surface processing is not performed after molding, desired pattern effects cannot be achieved and the surface of the product is uneven. Therefore, it is preferred to perform surface processing.

If the content of the ground material is greater than 200 parts by weight, relative to 100 parts by weight of the styrene-methylmethacrylate resin solution, it is undesirable in that changes in viscosity with respect to the passage of time become severe and the strength of the cured product is significantly decreased.

The size of the ground material is preferably within the range of 100 to 3.5 mesh. Where the size of the ground material is smaller than 100 mesh, changes in viscosity become severe with respect to the passage of time, leading to poor workability. In contrast, where the size of the ground material is larger than 3.5 mesh, this may results in problems such as highly frequent bubbling and poor visual appearance due to migration of the ground material upon curing, and deterioration of mechanical strength of the cured product.

In addition, the resin composition may further comprise commonly known additive ingredients for the artificial marble, for example, at least one additive selected from the group consisting of: a silicone- or non-silicone based antifoaming agent; a silane based, acidic or titanate based coupling agent, containing trimethoxysilane as a main ingredient; an organic or inorganic pigment or dye; phenyl salicylate-, benzophenone-, benzotriazole-, nickel derivative- or radical scavenger-based UV-light absorber; halogen-, phosphorus- or inorganic metal-based flame retardant; a stearic acid- or silicone-based release agent; a catechol- or hydroquinone-based polymerization inhibitor; and a phenol-, amine-, quinone-, sulfur- or phosphorus-based antioxidant and thermal stabilizer.

The artificial marble in accordance with the present invention is prepared as follows.

Firstly, the styrene-methylmethacrylate copolymer is placed in styrene, methylmethacrylate or a mixture thereof as a solvent and dissolved at a temperature of 40 to 60°C to prepare the styrene-methylmethacrylate resin solution. Then, the inorganic filler, cross-linkable monomer, polymerization initiator, chain transfer agent, ground material, and other additives are added to the resulting resin solution and the mixture is stirred well to prepare a resin composition.

In preparing the styrene-methylmethacrylate resin solution, only a part of the styrene, methylmethacrylate or a mixture thereof may be used to dissolve the copolymer so as to prepare the syrup, and then the remaining parts thereof may be mixed with the resulting syrup in order to control viscosity and styrene content.

Next, the prepared resin composition is defoamed and continuously fed to a mold. As the mold continuously moves, curing is progressed (so-called, continuous casting).

In this connection, curing conditions for the continuous molding are preferably a temperature of 20 to 150°C and duration of 30 min to 2 hours. If the curing temperature is lower than 20°C, it is difficult to smoothly progress the curing process. Whereas, if the curing temperature is higher than 150°C, this may undesirably cause excessive volatilization of the monomer in the course of the polymerization process, and deformation and cracking of the polymerization product. In addition, where the curing time is shorter than 30 min, the curing process may require excessive energy supply and thus may exhibit the same problems as when the temperature is greater than 150°C. Conversely, where the curing time is longer than 2 hours, it is undesirable in that the inorganic filler and particulate ground material are settled and productivity is lowered.

Thereafter, the cured product is cooled and cut into a specified size. This is followed by surface polishing in order to accentuate effects of the added ground material.

### Best Mode for Carrying Out the Invention

### EXAMPLES

Now, the present invention will be described in more detail with reference to the following Examples. These examples are provided only for illustrating the present invention and should not be construed as limiting the scope and sprit of the present invention.

### Example 1

To 100 parts by weight of the styrene-methylmethacrylate resin solution, which was prepared by dissolving 25 parts by weight of a styrene-methylmethacrylate copolymer (80% by weight of styrene content, NAS 21, available from Nova Chemical, USA) in methylmethacrylate, were added 180 parts by weight of aluminum hydroxide, 3 parts by weight of diethylene glycol dimethacrylate, 1.0 part by weight of benzoyl peroxide (BPO), 0.1 parts by weight of normal dodecyl mercaptan, 0.5 parts by weight of BYK 555 (BYK-Chemie, Germany) as an antifoaming agent, 1 part by weight of BYK 900 (BYK-Chemie, Germany) as a coupling agent, 0.5 parts by weight of Hisorp-P (LG Chem., Ltd., Seoul, Korea) as a UV-light stabilizer (absorber) and 150 parts by weight of ground material, and stirred well. The resulting mixture was poured into a continuous mold and cured at a temperature of 20 to 150°C to prepare an artificial marble in accordance with the present invention.

### Example 2

An artificial marble was prepared following the same procedure as in Example 1, except that MS 600 (40% by weight of styrene content, Nippon Steel Chemical Co., Ltd., Japan), as a styrene-methylmethacrylate copolymer, was used to prepare a styrene-methylmethacrylate resin solution.

### Example 3

An artificial marble was prepared following the same procedure as in Example 1, except that, as a styrene-methylmethacrylate copolymer, MS 600 (40% by weight styrene content) was dissolved in a mixture of methylmethacrylate and styrene to prepare a styrene-methylmethacrylate resin solution.

### Example 4

An artificial marble was prepared following the same procedure as in Example 1, except that 40 parts by weight of a styrene-methylmethacrylate copolymer was dissolved in a mixture of methylmethacrylate and styrene to prepare a styrene-methyl methacrylate resin solution.

### Example 5

An artificial marble was prepared following the same procedure as in Example 1, except that a styrene-methylmethacrylate resin solution was prepared by mixing 50 parts by weight of a styrene monomer with 50 parts by weight of a styrene-methylmethacrylate syrup, which was prepared by dissolving 25 parts by weight of a styrene-methylmethacrylate copolymer (80% by weight styrene content, NAS 21, available from Nova Chemical, USA) in a methylmethacrylate monomer.

### Example 6

An artificial marble was prepared following the same procedure as in Example 1, except that, as a styrene-methylmethacrylate copolymer, MS 600 (40% by weight styrene content) was dissolved in a mixture of a methylmethacrylate monomer and a styrene monomer to prepare a styrene-methylmethacrylate resin solution, and 6 parts by weight of diethylene glycol dimethacrylate, 2.0 parts by weight of a benzoyl peroxide (BPO) and 0.5 parts by weight of a heat resistant antioxidant (B-561, Ciba Specialty Chemicals, USA) were further added thereto.

### Comparative Example 1

An artificial marble was prepared following the same procedure as in Example 1, except that a methylmethacrylate resin solution was prepared using a methylmethacrylate polymer instead of a styrene-methylmethacrylate copolymer.

### Comparative Example 2

An artificial marble was prepared following the same procedure as in Example 1, except that 85.7 parts by weight of an unsaturated polyester resin (M-900, Sewon Chemical Co., Ltd., Seoul, Korea) was dissolved in 14.3 parts by weight of a methylmethacrylate to prepare a resin solution and 0.3 parts by weight of normal dodecyl mercaptan was added thereto.

### Comparative Example 3

An artificial marble was prepared following the same procedure as in Example 1, except that a resin solution was prepared by mixing 20 parts by weight of a styrene monomer with 80 parts by weight of a methylmethacrylate syrup, which was prepared by dissolving 25 parts by weight of a methylmethacrylate polymer in methylmethacrylate.

### Comparative Example 4

An artificial marble was prepared following the same procedure as in Example 1, except that a resin solution was prepared by mixing 40 parts by weight of a styrene monomer with 60 parts by weight of a methylmethacrylate syrup, which was prepared by dissolving 25 parts by weight of a methylmethacrylate polymer in methylmethacrylate.

### Comparative Example 5

An artificial marble was prepared following the same procedure as in Example 1, except that a styrene-methylmethacrylate resin solution was prepared by dissolving 25 parts by weight of a styrene-methylmethacrylate copolymer (40% by weight styrene content, MS 600, Nippon Steel Chemical Co., Ltd., Japan) in styrene, instead of methylmethacrylate.

### Comparative Example 6

An artificial marble was prepared following the same procedure as in Example 1, except that a styrene-methylmethacrylate resin solution was prepared by dissolving 25 parts by weight of a methylmethacrylate polymer in a mixture of methylmethacrylate and styrene.

Transparency, thermal discoloration resistance, weatherability and heat deflection temperature of artificial marbles prepared in Examples 1 through 6 and Comparative Examples 1 through 6 were evaluated as follows. Results thus obtained are shown and compared in Table 1.

### Evaluation Method

### (1) Transparency

This was measured by removing pigments and ground materials which might affect transparency of artificial marbles, from compositions of the above-mentioned E xamples and Comparative Examples, to prepare the cured products having a thickness of 2 mm, followed by determination of transparency using a Haze meter (Murakami Color Research Laboratory, Japan).

### (2) Thermal discoloration resistance (ΔE)

A specimen of an artificial marble was allowed to stand at a temperature of 170°C for 1 hour and thermal discoloration resistance was measured using a color difference meter.

### (3) Weatherability (ΔE)

Accelerated Weathering Test was performed using a QUV tester according to ASTM G-53 and then weatherability was measured using a color difference meter.

### (4) Heat deflection temperature (°C)

This was measured according to ASTM D 648

**Table 1**

| | Polymer | Solvent | SM⁴⁾ content in resin solution (parts by weight) | Transparen cy (%) | Thermal discoloration resistance (ΔE) | Weatherabi lity (ΔE) | Heat deflection temperature (°C) |
|---|---|---|---|---|---|---|---|
| Ex. 1 | S-M copolymer ¹⁾ | MMA³⁾ | 20 | 33 | 0.23 | 2.3 | 105.6 |
| Ex. 2 | S-M Copolymer | NMA | 10 | 30 | 0.18 | 1.98 | 106.0 |
| Ex. 3 | S-M Copolymer | MMA, SM | 40 | 45 | 0.67 | 2.5 | 102.0 |
| Ex. 4 | S-M Copolymer | MMA, SM | 60 | 60 | 0.98 | 3.0 | 98.3 |
| Ex. 5 | S-M Copolymer | MMA, SM | 70 | 65 | 1.38 | 3.7 | 94.5 |
| Ex. 6 | S-M Copolymer | MMA, SM | 40 | 45 | 0.47 | 1.77 | 102.3 |
| Comp. Ex. 1 | PMMA²⁾ | MMA | 0 | 18 | 0.17 | 1.8 | 106 |
| Comp. Ex. 2 | Polyester | MMA | 40 | 48 | 4.68 | 7.3 | 104 |
| Comp. Ex. 3 | PMMA | MMA, SM | 20 | 25 | 0.41 | 2.4 | 104.7 |
| Comp. Ex. 4 | PMMA | MMA, SM | 40 | 35 | 0.75 | 3.9 | 101.9 |
| Comp. Ex. 5 | S-M Copolymer | SM | 85 | 70 | 2.46 | 5.5 | 86.0 |
| Comp. Ex. 6 | PMMA | MMA, SM | 20 | 26 | 0.45 | 2.5 | 103.5 |

| | | | | | | | |
|---|---|---|---|---|---|---|---|
| Note: ¹⁾ S-M Copolymer represents a styrene-methylmethacrylate copolymer. ²⁾ PMMA represents a methylmethacrylate polymer. ³⁾ MMA represents methylmethacrylate. ⁴⁾ SM represents styrene. | | | | | | | |

As can be seen from Table 1, artificial marbles prepared in Examples 1 through 6 exhibited remarkably improved transparency compared to Comparative Example 1 in which a conventional methylmethacrylate polymer was used alone. However, as shown in Comparative Example 5, when the content of styrene (SM) in the total resin solution was 85 parts by weight, thermal discoloration resistance and weatherability were significantly decreased and heat deflection temperature was also lowered.

In addition, at the same content of styrene in the resin solution, use of the styrene-methylmethacrylate copolymer (S-M copolymer) provided relatively improved thermal discoloration resistance, weatherability and heat deflection temperature characteristics, compared to when such a copolymer was not used.

The resin composition comprising the styrene-methylmethacrylate copolymer in accordance with the present invention can provide an artificial marble having improved transparency due to reduction of refractive index difference between aluminum hydroxide and methylmethacrylate while maintaining excellent weatherability and thermal characteristics possessed by a conventional acrylic polymer.

### Industrial Applicability

The resin composition comprising the styrene-methylmethacrylate copolymer in accordance with the present invention can provide an artificial marble having improved transparency due to reduction of refractive index difference between aluminum hydroxide and methylmethacrylate while maintaining excellent weatherability and thermal characteristics possessed by a conventional acrylic polymer.

## Claims

1. A resin composition, comprising:
100 parts by weight of a styrene-methylmethacrylate resin solution containing a styrene-methylmethacrylate copolymer and at least one of styrene and methylmethacrylate;
100 to 200 parts by weight of an inorganic filler;
0.5 to 10 parts by weight of a cross-linkable monomer, and wherein the content of styrene in 100 parts by weight of the styrene-methylmethacrylate resin solution is within the range of 10 to 70 parts by weight.

2. The composition as set forth in claim 1, wherein the amount of the styrene-methylmethacrylate copolymer is 10 to 50 parts by weight, and the amount of at least one of styrene and methylmethacrylate is 50 to 90 parts by weight, relative to 100 parts by weight of the styrene-methylmethacrylate resin solution.

3. The composition as set forth in claim 1, wherein the inorganic filler is selected from the group consisting of aluminum hydroxide, magnesium hydroxide, calcium aluminate, and mixtures thereof.

4. The composition as set forth in claim 1, wherein the inorganic filler is surface-treated with a silane based coupling agent, titanate based coupling agent or stearic acid.

5. The composition as set forth in claim 1, wherein the particle size of the inorganic filler is within the range of 5 to 100 µm.

6. The composition as set forth in claim 1, wherein the cross-linkable monomer is selected from the group consisting of ethylene glycol dimethacrylate, diethylene glycol dimethacrylate, triethylene glycol dimethacrylate, tetraethylene glycol dimethacrylate, 1,6-hexane diol dimethacrylate, polybutylene glycol dimethacrylate, trimethylol propane trimethacrylate, neopentyl glycol dimethacrylate, and mixtures thereof.

7. The composition as set forth in claim 1, further comprising:
0.1 to 5 parts by weight of a polymerization initiator; and
0.1 to 5 parts by weight of a chain transfer agent.

8. The composition as set forth in claim 7, wherein the polymerization initiator is selected from the group consisting of benzoyl peroxide, dicumyl peroxide, butyl hydroperoxide, cumyl hydroperoxide, t-butyl peroxy maleic acid, t-butyl hydroperoxide, acetyl peroxide, lauroyl peroxide, azobisisobutyronitrile, azobisdimethylvaleronitrile, a mixture of peroxide and amine or sulfonic acid, a mixture of peroxide and a cobalt compound, and mixtures thereof.

9. The composition as set forth in claim 7, wherein the chain transfer agent is selected from normal dodecyl mercaptan, tertiary dodecyl mercaptan, benzyl mercaptan and trimethylbenzyl mercaptan.

10. The composition as set forth in claim 1, further comprising at least one additive selected from the group consisting of ground material, an antifoaming agent, a coupling agent, an organic or inorganic pigment or dye, a UV-light absorber, a flame retardant, a release agent, a polymerization inhibitor, a thermal stabilizer and an antioxidant.

11. The composition as set forth in claim 10, wherein the ground material is in the form of granules prepared by crushing acrylic, unsaturated polyester based or epoxy based artificial marble into a predetermined size.

12. The composition as set forth in claim 10, wherein the size of the ground material is within the range of 100 to 3.5 mesh.

13. An artificial marble prepared using a resin composition according to any one of claims 1 through 12.

14. A process for preparing an artificial marble, which comprises:
preparing a resin composition according to any one of claims 1 through 12;
pouring the resin composition into a continuous mold and curing it at a temperature of 20 to 150°C for 30 minutes to 2 hours; and
cooling and cutting the cured product, followed by surface polishing.

## Patentansprüche

1. Harzzusammensetzung, umfassend:
100 Gew.-Teile einer Styrol-Methylmethacrylat-Harzlösung, umfassend ein Styrol-Methylmethacrylat-Copolymer und zumindest eines von Styrol und Methylmethacrylat,
100 bis 200 Gew.-Teile eines anorganischen Füllstoffes,
0,5 bis 10 Gew.-Teile eines vernetzbaren Monomers, und
worin der Gehalt von Styrol in 100 Gew.-Teilen der Styrol-Methylmethacrylat-Harzlösung innerhalb des Bereiches von 10 bis 70 Gew.-Teilen fällt.

2. Zusammensetzung nach Anspruch 1, worin die Menge des Styrol-Methylmethacrylat-Copolymers 10 bis 50 Gew.-Teile ist und die Menge des zumindest einen von Styrol und Methylmethacrylat 50 bis 90 Gew.-Teile ist, bezogen auf 100 Gew.-Teile der Styrol-Methylmethacrylat-Harzlösung.

3. Zusammensetzung nach Anspruch 1, worin der anorganische Füllstoff ausgewählt ist aus der Gruppe bestehend aus Aluminiumhydroxid, Magnesiumhydroxid, Calciumaluminat und Mischungen davon.

4. Zusammensetzung nach Anspruch 1, worin der anorganische Füllstoff mit einem Kupplungsmittel auf Silanbasis, Kupplungsmittel auf Titanatbasis oder Stearinsäure oberflächenbehandelt ist.

5. Zusammensetzung nach Anspruch 1, worin die Teilchengröße des anorganischen Füllstoffes innerhalb des Bereiches von 5 bis 100 µm fällt.

6. Zusammensetzung nach Anspruch 1, worin das vernetzbare Monomer ausgewählt ist aus der Gruppe bestehend aus Ethylenglycoldimethacrylat, Diethylenglycoldimethacrylat, Triethylenglycoldimethacrylat, Tetraethylenglycoldimethacrylat, 1,6-Hexandioldimethacrylat, Polybutylenglycoldimethacrylat, Trimethylolpropantrimethacrylat, Neopentylglycoldimethacrylat und Mischungen davon.

7. Zusammensetzung nach Anspruch 1, weiterhin umfassend:
0,1 bis 5 Gew.-Teile eines Polymerisationsinitiators und
0,1 bis 5 Gew.-Teile eines Kettenübertragungsmittels.

8. Zusammensetzung nach Anspruch 7, worin der Polymerisationsinitiator ausgewählt ist aus der Gruppe bestehend aus Benzoylperoxid, Dicumylperoxid, Butylhydroperoxid, Cumylhydroperoxid, t-Butylperoxymaleinsäure, t-Butylhydroperoxid, Acetylperoxid, Lauroylperoxid, Azobisisobutyronitril, Azobisdimethylvaleronitril, einer Mischung aus Peroxid und Amin oder Sulfonsäure, einer Mischung aus Peroxid und einer Cobaltverbindung und Mischungen davon.

9. Zusammensetzung nach Anspruch 7, worin das Kettenübertragungsmittel ausgewählt ist aus normalem Dodecylmercaptan, tertiärem Dodecylmercaptan, Benzylmercaptan und Trimethylbenzylmercaptan.

10. Zusammensetzung nach Anspruch 1, weiterhin umfassend zumindest ein Additv, ausgewählt aus der Gruppe bestehend aus einem gemahlenen Material, einem Antischäummittel, Kupplungsmittel, organischen oder anorganischen Pigment oder Farbstoff, UV-Lichtabsorber, Flammwidrigkeitsmittel, Freisetzungsmittel, Polymerisationsinhibitor, thermischen Stabilisator und Antioxidans.

11. Zusammensetzung nach Anspruch 10, worin das gemahlene Material in der Form von Körnchen vorliegt, hergestellt durch Zerstoßen von künstlichem Marmor auf Acryl-, ungesättiger Polyester- oder Epoxy-Basis, zu einer bestimmten Größe.

12. Zusammensetzung nach Anspruch 10, worin die Größe des gemahlenen Materials innerhalb des Bereiches von 100 bis 3,5 mesh ist.

13. Künstlicher Marmor, hergestellt unter Verwendung einer Harzzusammensetzung nach einem der Ansprüche 1 bis 12.

14. Verfahren zur Herstellung eines künstlichen Marmors, umfassend:
Herstellung einer Harzzusammensetzung nach einem der Ansprüche 1 bis 12,
Gießen der Harzzusammensetzung in eine kontinuierliche Form und
Härten dieser bei einer Temperatur von 20 bis 150°C für 30 Minuten bis 2 Stunden, und
Kühlen und Schneiden des gehärteten Produktes, mit anschließendem Oberflächenpolieren.

## Revendications

1. Composition de résine, comprenant :
100 parties en poids d'une solution de résine de styrène-méthylméthacrylate contenant un copolymère styrène-méthylméthacrylate et au moins l'un parmi le styrène et le méthylméthacrylate ;
100 à 200 parties en poids d'une charge inorganique ;
0,5 à 10 parties en poids d'un monomère réticulable, et dans laquelle la teneur en styrène dans 100 parties en poids de la solution de résine de styrène-méthylméthacrylate se situe à l'intérieur de la plage de 10 à 70 parties en poids.

2. Composition selon la revendication 1, dans laquelle la quantité du copolymère styrène-méthylméthacrylate est de 10 à 50 parties en poids, et la quantité d'au moins l'un parmi le styrène et le méthylméthacrylate est de 50 à 90 parties en poids, par rapport à 100 parties en poids de la solution de résine de styrène-méthylméthacrylate.

3. Composition selon la revendication 1, dans laquelle la charge inorganique est choisie dans le groupe constitué par l'hydroxyde d'aluminium, l'hydroxyde de magnésium, l'aluminate de calcium, et des mélanges de ceux-ci.

4. Composition selon la revendication 1, dans laquelle la charge inorganique est traitée en surface avec un agent de couplage à base de silane, un agent de couplage à base de titanate ou de l'acide stéarique.

5. Composition selon la revendication 1, dans laquelle la taille des particules de la charge inorganique se situe dans la plage comprise entre 5 et 100 µm.

6. Composition selon la revendication 1, dans laquelle le monomère réticulable est choisi dans le groupe constitué par le diméthacrylate d'éthylène glycol, le diméthacrylate de diéthylène glycol, le diméthacrylate de triéthylène glycol, le diméthacrylate de tétraéthylène glycol, le diméthacrylate de 1,6-hexane diol, le diméthacrylate de polybutylène glycol, le triméthacrylate de triméthylolpropane, le diméthacrylate de néopentyl glycol, et des mélanges de ceux-ci.

7. Composition selon la revendication 1, comprenant en outre :
0,1 à 5 parties en poids d'un initiateur de polymérisation ; et
0,1 à 5 parties en poids d'un agent de transfert de chaîne.

8. Composition selon la revendication 7, dans laquelle l'initiateur de polymérisation est choisi dans le groupe constitué par le peroxyde de benzoyle, le peroxyde de dicumyle, l'hydroperoxyde de butyle, l'hydroperoxyde de cumyle, l'acide t-butyl peroxy maléique, l'hydroperoxyde de t-butyle, le peroxyde d'acétyle, le peroxyde de lauroyle, l'azobisisobutyronitrile, l'azobisdiméthylvaléronitrile, un mélange de peroxyde et d'amine ou d'acide sulfonique, un mélange de peroxyde et d'un composé de cobalt, et des mélanges de ceux-ci.

9. Composition selon la revendication 7, dans laquelle l'agent de transfert de chaîne est choisi parmi le dodécylmercaptan normal, le dodecylmercaptan tertiaire, le benzylmercaptan et le triméthylbenzylmercaptan.

10. Composition selon la revendication 1, comprenant en outre au moins un additif choisi dans le groupe constitué par un matériau moulu, un agent antimousse, un agent de couplage, un pigment ou un colorant organique ou inorganique, un agent d'absorption de la lumière UV, un agent ignifuge, un agent de libération, un inhibiteur de polymérisation, un stabilisateur thermique et un antioxydant.

11. Composition selon la revendication 10, dans laquelle le matériau moulu est sous la forme de granulés préparés en broyant jusqu'à une taille prédéterminée un marbre artificiel à base de polyester acrylique insaturé ou à base d'époxy.

12. Composition selon la revendication 10, dans laquelle la taille du matériau moulu est comprise dans la plage de 100 à 3,5 mesh.

13. Marbre artificiel préparé en utilisant une composition de résine selon l'une quelconque des revendications 1 à 12.

14. Procédé de préparation d'un marbre artificiel, qui comprend :
la préparation d'une composition de résine selon l'une quelconque des revendications 1 à 12 ;
le versement de la composition de résine dans un moule en continu, puis son durcissement à une température de 20 à 150°C pendant 30 minutes à 2 heures ; et
le refroidissement et la découpe du produit durci, suivi d'un polissage de surface.
